# EUROPÄISCHE PATENTSCHRIFT

(11) **EP 2 393 758 B1**
(45) Veröffentlichungstag und Bekanntmachung des Hinweises auf die Patenterteilung: **16.01.2013**
(21) Anmeldenummer: 10703410.0
(22) Anmeldetag: 27.01.2010
(51) Int. Cl.: C02F 9/04, C02F 1/70, C02F 1/72, C02F 1/28, C02F 11/08, C07C 205/06, C02F 1/66, C02F 101/38

(54) **VERFAHREN ZUR AUFARBEITUNG VON ABWÄSSERN**
METHOD FOR TREATING WASTEWATERS
PROCÉDÉ POUR LE TRAITEMENT D'EAUX RÉSIDUAIRES

(30) Priorität: 06.02.2009 DE 102009007761
(43) Veröffentlichungstag der Anmeldung: 14.12.2011
(73) Patentinhaber: Bayer MaterialScience AG, 51368 Leverkusen (DE)
(72) Erfinder: RAUSCH, Andreas Karl, 41464 Neuss (DE); BLÖCHER, Christoph, 51379 Leverkusen (DE)
(86) Internationale Anmeldenummer: PCT/EP2010/000463
(87) Internationale Veröffentlichungsnummer: WO 2010/089043

(56) Entgegenhaltungen:
- DE-A1- 3 316 265
- US-A- 6 100 382
- SCHWARZENBACH R P ET AL: "QUINONE AND IRON PORPHYRIN MEDIATED REDUCTION OF NITROAROMATIC COMPOUNDS IN HOMOGENEOUS AQUEOUS SOLUTION" ENVIRONMENTAL SCIENCE AND TECHNOLOGY, AMERICAN CHEMICAL SOCIETY. EASTON, PA, US LNKD- DOI:10.1021/ES00080A017, Bd. 24, Nr. 10, 1. Oktober 1990 (1990-10-01), Seiten 1566-1574, XP000173696 ISSN: 0013-936X

## Beschreibung

Die Erfindung betrifft ein Verfahren zur Aufarbeitung von Nitroaromaten und Nitro-hydroxy-aromaten enthaltenden Abwässern, wie sie bei der Herstellung von Nitroaromaten anfallen.

Nitroaromaten und Nitro-hydroxy-aromaten wirken bakterizid und / oder sind biologisch schwer abbaubar. Sie dürfen daher nicht in die Umwelt gelangen und auch nicht in hohen Konzentrationen in biologische Kläranlagen eingeleitet werden. Dies macht die verfahrenstechnische Aufarbeitung dieser Abwässer erforderlich, damit die Abwässer einer biologischen Kläranlage zugeführt werden können.

Der Stand der Technik offenbart mehrere verfahrenstechnische Lösungen zum Abbau von Nitro-und Nitro-hydroxy-aromaten in wässrigen Lösungen, die aber alle durch signifikante Nachteile gekennzeichnet sind.

DE 2818680 A1 beansprucht ein Verfahren zur Aufarbeitung von Nitro-hydroxy-aromaten enthaltenden Abwässern, dadurch gekennzeichnet, dass man die Nitro-hydroxy-aromaten enthaltenden Abwässer unter Luft- und Sauerstoffausschluss auf Temperaturen im Bereich von 150 °C bis 500 °C unter Druck erhitzt. Als bevorzugter Druckbereich werden 50 bis 350 bar angegeben. Für dieses Verfahren ist es vorteilhaft, wenn die Abwässer die Nitro-hydroxy-aromaten in Form ihrer wasserlöslichen Salze enthalten, die im alkalischen Milieu gebildet werden können. Nachteilig ist an diesem Verfahren der hohe erforderliche Druck, der bei der kontinuierlichen Durchführung dieses Verfahrens zu hohen Kosten für die Bereitstellung und Betreibung geeigneter Pumpen führt. Auch ist für die Aufrechterhaltung der geforderten Temperatur eine permanente Beheizung erforderlich. Ein weiterer Nachteil dieses Verfahrens ist, dass der Gehalt an Nitrit-Ionen in dem Abwasser durch das Verfahren nicht verringert wird, sondern wie den Beispielen der DE 2818680 Au zu entnehmen ist, mindestens konstant bleibt (Beispiel 4), sich aber auch verdoppeln kann (Beispiel 2). Nitrit-Ionen sind ebenfalls bakterizid und können nur in geringem Maße von biologischen Kläranlagen akzeptiert werden.

EP 503387 B1 beansprucht ein Verfahren zur Aufarbeitung von aromatischen Nitroverbindungen enthaltenden Abwässern aus Anlagen zur Herstellung von Nitrobenzol durch Behandlung mit Salpetersäure bei Temperaturen von 180 bis 350 °C und Drücken von 40 bis 250 bar. Durch eine derartige Behandlung sinkt der Gehalt an Nitro-hydroxy-aromaten auf Werte von unter 1 ppm bei einem gleichzeitigen TOC-Abbau (TOC = Total Organic Carbon) von mehr als 95 %.

Nachteilig an diesem Verfahren sind die erforderlichen Betriebsbedingungen, sowie der Einsatz von Salpetersäure, der die Nitratfracht im Abwasser erhöht.

EP 1132347 B1 beansprucht ein Verfahren, in dem Abwässer aus der Nitroaromatensynthese zunächst bis nahe an oder über die Löslichkeit der Nitro-hydroxy-aromaten aufkonzentriert werden und dann einer thermischen Abbaubehandlung unterzogen werden, die bevorzugt bei für Wasser superkritischen Bedingungen durchgeführt wird. Zur Durchführung dieses Verfahrens sind Betriebsbedingungen oberhalb des kritischen Druckes und der kritischen Temperatur von Wasser erforderlich. Der kritische Druck von Wasser liegt bei 218,3 bar und die kritische Temperatur von Wasser bei 374,1 °C (Handbook of Chemistry and Physics, R.C. Weast (Editor), CRC Press, Boca Raton, 66th Edition, 1985, Seite F-64, Tabelle 2). Der Betrieb einer Abwasserbehandlung unter solchen Bedingungen verursacht hohe Kosten.

Ebenfalls durch hohe Kosten zeichnen sich alle Verfahren aus, die Wasserstoffperoxid als Oxidationsmittel nutzen. Zumeist wird dabei zweiwertiges Eisen als Katalysator unter sauren Bedingungen eingesetzt. Dieses Verfahren wird als Fenton-Oxidation bezeichnet. Die Wirksamkeit dieses Verfahrens zur Elimination von Nitroaromaten wurde nachgewiesen (z. B. E. Chamarro, A. Marco, S. Esplugas (2001): Use of fenton reagent to improve organic chemical biodegradability. Water Research 35 (4), Pages 1047-1051, oder EP 22525 B1, oder EP 360989 B1). Gegenüber den oben genannten Verfahren weist dieses Verfahren den Vorteil auf, dass es drucklos und bei Umgebungstemperatur betrieben werden kann. Allerdings verursacht das eingesetzte Oxidationsmittel Wasserstoffperoxid hohe Kosten, die umso höher liegen, je höher der Gehalt an Nitroaromaten oder Nitro-hydroxy-aromaten im Abwasser ist. Zudem ist dem Verfahren ein hoher Verbrauch an katalytisch aktivem Eisen eigen, so dass erhebliche Mengen an Schlamm entstehen, deren Entsorgung zusätzliche Kosten verursacht. Für höher belastete Abwässer wie sie z. B. bei der Herstellung von Nitroaromaten oder bei der Herstellung von Nitro-hydroxy-aromaten anfallen, sind die Verfahren, die Wasserstoffperoxid als Oxidationsmittel einsetzen, daher ungeeignet.

DE 3316265 C2 beansprucht ein Verfahren zur Nassoxidation von organischen Stoffen in belasteten Abwässern durch Behandlung mit Sauerstoff bei erhöhten Temperaturen und Drücken unter Anwesenheit eines Redoxsystems, wie Eisenionen und unter gleichzeitiger Anwesenheit von Co-Katalysatoren wie Benzochinon, Naphtochinon oder p-Aminphenol. Die Nassoxidation wird im saueren Milieu bei pH = 1 - 4, Temperaturen von 50 - 200 °C und Drücken von 1 bis 60 bar durchgeführt.

Beispiel 17 dieser Schrift beschreibt, dass die für die Oxidation erforderlichen Co-Katalysatoren auch durch alkalische Behandlung von Braunkohle gewonnen werden kann, sofern die Braunkohle auch während des Oxidationsschrittes in der Reaktionsmischung verbleibt. Beispiel 18 beschreibt die identische Vorgehensweise für Steinkohle.

Diese Schrift lehrt außerdem, Abwässern, die oxidierend wirkende Substanzen wie z.B. Nitroaromaten enthalten, ein Reduktionsmittel, wie z.B. Hydrazin, Schwefeldioxid, Natriumsulfid oder Eisenspäne zuzusetzen um die beispielhaft genannten Nitroaromaten in Amine umzuwandeln. Diese Reduktion muss in einem vorgeschalteten Verfahrensschrittt erfolgen, wie u. a. aus Beispiel 16 der Schrift geht hervorgeht, in dem Natriumsulfid als Reduktionsmittel zum Einsatz kommt. Dort wurde ein Abwasser, wie es bei der Nitrostilbensäure-Synthese anfällt mit Natronlauge auf pH = 12 gebracht, mit 2 g/L Natriumsulfid versetzt und bei 140 °C in Abwesenheit von Sauerstoff 30 Minuten gehalten. Daraufhin wurde das Abwasser bei 180 °C, einem Sauerstoffpartialdruck von 5 bar, bei pH = 2 und der Anwesenheit von Eisen(II)sulfat oxidiert. Durch eine 90minütige Behandlung dieser Art wurde der DOC-Wert um etwa 80 % reduziert (DOC = Dissolved Organic Carbon).

Die Verwendung der von DE 3316265 C2 empfohlenen Reduktionsmittel ist jedoch nachteilig, da diese teuer sind (Hydrazin, Sulfide, Sulfite) und / oder das Abwasser mit zusätzlicher Salzfracht belasten (Sulfate, Metallionen). Dennoch weist dieses Verfahren gegenüber dem Stand der Technik einige Vorzüge auf, da es bei niedrigen Drücken und Temperaturen den Abbau von organischen Verbindungen in Abwässern realisieren kann.

Aufgabe der Erfindung war es daher ein betriebssicheres, einfaches und kostengünstiges Verfahren zur Aufarbeitung von Nitroaromaten und Nitro-hydroxy-aromaten enthaltenden Abwässern bereitzustellen, das sich durch ökonomisch günstige Betriebsbedingungen auszeichnet und das gewährleistet, dass das behandelte Abwasser in eine biologische Kläranlage eingeleitet werden kann.

Überraschend wurde gefunden, dass die Aufarbeitung von Nitroaromaten und Nitro-hydroxy-aromaten enthaltenden Abwässern im Sinne dieser Erfindung gelingt, wenn das Verfahren zur Aufarbeitung dieser Abwässer zweistufig durchgeführt wird und in der ersten Stufe die Nitroaromaten und Nitro-hydroxy-aromaten durch ein kostengünstiges, nicht salz-bildendes Reduktionsmittel ausgewählt aus Torf, Braunkohle und / oder Steinkohle, reduziert, also hydriert, werden, sowie in der zweiten Stufe die erhaltene Reaktionsmischung aus der ersten Stufe im sauren Milieu einer eisen-katalysierten Nassoxidation mit Sauerstoff unterzogen wird.

Die Erfindung betrifft ein Verfahren zur Behandlung von Nitroaromaten und / oder Nitrohydroxy-aromaten enthaltendem Abwasser, dadurch gekennzeichnet, dass das Abwasser in einer ersten Stufe mit einem organischen Reduktionsmittel, das in dem Abwasser nicht salz-bildend ist, ausge wählt aus Torf, Braunkohle und / oder Steinkohle, versetzt und unter reduzierenden Bedingungen behandelt wird und das aus der ersten Stufe erhaltene Abwasser anschließend in einer zweiten Stufe sauer gestellt und mit einem Oxidationsmittel oxidiert wird.

Es wurde gefunden, dass eine eisen-katalysierte Nassoxidation mit Sauerstoff im alkalischen Milieu alleine nicht ausreicht um Nitro-hydroxy-aromaten zufriedenstellend abzubauen (Vergleichsbeispiel 1) und sich eine eisen-katalysierte Nassoxidation mit Sauerstoff im sauren Milieu verbietet, da die Nitro-hydroxy-aromaten im Sauren als Feststoffe ausfallen und die Feststoffe explosionsgefährlich sein können (Vergleichsbeispiel 2). Eine vollständige Eliminierung der Nitro-hydroxy-aromaten gelingt mit einer eisen-katalysierten Nassoxidation mit Sauerstoff dann, wenn - wie in DE 3316265 C2 beschrieben - die Nitro-hydroxy-aromaten im chemischen Sinne reduziert, werden, z.B. mit Natriumsulfit (Vergleichsbeispiel 3).

Um die Verwendung des teuren und Sulfatfracht verursachenden Natriumsulfits zu umgehen, wurde der Einsatz von kostengünstigeren Hilfsstoffen wie Eisenspänen und Braunkohle überprüft. Mit Eisenspänen, die als Reduktionsmittel bekannt sind, wird der Gehalt an Nitro-hydroxy-aromaten durch die Vor-Reduktion um 64 % verringert. Überraschend wurde jedoch gefunden, dass auch Braunkohle im alkalischen Milieu als Reduktionsmittel für die Reduktion von Nitro-hydroxy-aromaten eingesetzt werden kann, wenn die Vor-Reduktion bei erhöhter Temperatur, bevorzugt bei 120 - 200°C durchgeführt wird. Durch Braunkohle kann der Gehalt an Nitro-hydroxy-aromaten um 86 % verringert werden (Vergleichsbeispiel 4).

Wird die eisen-katalysierte Nassoxidation eines Nitro-hydroxy-aromaten enthaltenden Abwassers mit Sauerstoff mit der Vor-Reduktion des Abwassers mit Braunkohle im alkalischen Milieu kombiniert, so gelingt der vollständige Abbau der Nitro-hydroxy-aromaten (Erfindungsgemäßes Beispiel 5). Dabei zeichnet sich Braunkohle als kostengünstiges Reduktionsmittel aus und trägt nicht zur Steigerung der Salzfracht des Abwassers bei, da sie selbst biologisch abbaubar ist. Der in den Nitroaromaten oder Nitro-hydroxy-aromaten enthaltene Stickstoff wird dabei in Bakterienunschädliche Verbindungen überführt, überwiegend Ammonium. Eine Bildung von Nitrit findet nicht statt, im Gegenteil wird sogar im Abwasser bereits vorhandenes Nitrit ebenfalls umgewandelt (Erfindungsgemäßes Beispiel 6).

Erfindungsgemäß ist daher ein Verfahren zur Behandlung von Nitroaromaten und / oder Nitrohydroxy-aromaten enthaltendem Abwasser, dadurch gekermzeichnet, dass das Abwasser in einer ersten Stufe mit Torf, Braunkohle und / oder Steinkohle versetzt und unter reduzierenden Bedingungen behandelt wird und das aus der ersten Stufe erhaltene Abwasser anschließend in einer zweiten Stufe sauer gestellt und mit einem Oxidationsmittel oxidiert wird.

Nitroaromaten und / oder Nitro-hydroxy-aromaten enthaltende Abwässer fallen bei der Herstellung von Nitroaromaten, wie zum Beispiel bei der Herstellung von Nitrobenzol durch Nitrierung von Benzol oder der Herstellung von Dinitrotoluol durch Nitrierung von Toluol an. Diese Abwässer fallen als alkalische Lösungen an, da sich die Nitro-hydroxy-aromaten im alkalischen Milieu in Form ihrer Salze in wässrigem Medium lösen. Ein solches alkalisches Nitroaromaten und / oder Nitro-hydroxy-aromaten enthaltendes Abwasser wird mit einem Reduktionsmittel versetzt und auf Temperaturen von 80 - 200 °C, bevorzugt 120 - 200 °C erhitzt und in diesem Temperaturbereich für eine Verweilzeit zwischen 5 min und 5 h, bevorzugt 15 min bis 3 h gehalten. Bevorzugt wird die Temperatur, auf die das Abwasser aufgeheizt wird, für die Dauer der Verweilzeit konstant gehalten. Als Reduktionsmittel wird erfindungsgemäß ein nicht salz-bildendes Reduktionsmittel ausgewählt aus Torf. Braunkohle und / oder Steinkohle, besonders bevorzugt Braunkohle einfacher Qualität, eingesetzt. Die besonders bevorzugte Braunkohle einfacher Qualität ist kostengünstig, und gegebenenfalls aus dem Verfahren ausgetragene Reste können in eine biologische Kläranlage gegeben werden. Die Konzentration des Reduktionsmittels beträgt bezogen auf das Volumen des Abwassers bevorzugt 1 bis 200 g/L, besonders bevorzugt 5 bis 50 g/L.

Die als Reduktionsmittel eingesetzten Torfe, Braunkohlen oder Steinkohlen unterscheiden sich durch ihren Inkohlungsgrad, der sich an dem Anteil an flüchtigen Bestandteilen äußert und in der genannten Reihenfolge abfällt. So zeigen Braunkohlen einfacher Qualität wie z.B. Lignit einen Anteil von 50 - 60 Gew.-% an flüchtigen Bestandteilen, Hartbraunkohle 45 - 50 Gew.-%, während die verschiedenen Steinkohlesorten flüchtige Bestandteile von weniger als 45 Gew.-% aufweisen. Für Torf sind flüchtige Bestandteile von mehr als 50 Gew.-% charakteristisch und er enthält im Gegensatz zu Braunkohle noch freie Cellulose (Römpp Chemielexikon Online 2008, Georg Thieme Verlag, Stuttgart, Stichworte "Torf" und "Kohle").

Das aus der ersten Stufe (Vor-Reduktion) erhaltene Abwasser wird mit einem Überschuss an Säure neutralisiert und sauer gestellt. Das Ansäuern kann mit einer mineralischen Säure, bevorzugt Schwefelsäure, aber auch mit einer organischen Säure erfolgen. Als organische Säuren werden bevorzugt Essigsäure oder Oxalsäure eingesetzt, die selbst leicht biologisch abbaubar sind. Auch Mischungen mehrerer Säuren können zum Ansäuern eingesetzt werden.

Nach dem Ansäuern erfolgt in der zweiten Stufe die Oxidation mit einem Oxidationsmittel. Bevorzugt handelt es sich dabei um die eisen-katalysierte Nassoxidation mit Sauerstoff. Dazu wird der sauer gestellte Abwasserstrom mit einem Katalysator, bevorzugt mit Eisen(II)sulfat, versetzt und einem Oxidationsreaktor zugeführt, in dem das Abwasser bevorzugt bei 100 - 250 °C, besonders bevorzugt 160 - 220 °C für 5 bis 180 Minuten, bevorzugt 30 bis 60 Minuten, mit einem sauerstoffhaltigern Gas, bevorzugt mit Luft, besonders bevorzugt mit technisch reinem Sauerstoff, behandelt wird. Als Oxidationsreaktor werden bevorzugt eine Blasensäule oder mehrere parallel oder in Reihe geschaltete Blasensäulen verwendet.

Die nach dem erfindungsgemäßen Verfahren behandelten Abwässer sind soweit von Nitroaromaten, Nitro-hydroxy-aromaten und Nitrit befreit, dass sie unmittelbar zur biologischen Reinigung in entsprechende Kläranlagen abgegeben werden können.

### Beispiele

Für die nachfolgenden Beispiele wurde ein Abwasser eingesetzt, wie es in der Produktion von Nitroaromaten, zum Beispiel in der Produktion von Nitrobenzol erhalten werden kann. Dieses Abwasser enthält keine Nitroaromaten, aber mehrere Nitro-hydroxy-aromaten, die im konkreten Falle ausnahmslos der Gruppe der Nitrophenole angehören, deren chemische Bezeichnung wie folgt abgekürzt wird:

| | |
|---|---|
| 2-NP: | 2-Nitrophenol |
| 4-NP: | 4-Nitrophenol |
| 2,4-DNP: | 2,4-Dinitrophenol |
| 2,6-DNP: | 2,6-Dinitrophenol |
| 2,4,6-TNP: | 2,4,6-Trinitrophenol, Trivialname: Pikrinsäure |

Der Gehalt an Nitrophenolen im Abwasser wurde mittels HPLC-Analytik ermittelt. Eine dazu geeignete Methode wird beispielsweise von Belloli *et al.* beschrieben (Belloli, R.; Barlette B.; Bolzacchini, E.: Meinardi, S.; Orlandi, M.; Rindone, B. "Determination of toxic nitrophenols in the atmosphere by high-performance liquid chromatography", Journal of Chromatography A, 846 (1999) 277-281).

### Vergleichsbeispiel 1: Nassoxidation im alkalischen Milieu ohne Vor-Reduktion

4 L Abwasser aus der Produktion von Nitroaromaten, das stark alkalisch war, wurden in einen Labor-Rührwerksbehälter gegeben und stufenweise auf 200 °C erhitzt. Außerdem erfolgte die Zugabe von Sauerstoff auf einen Gesamtdruck von 20 bar. Nach 3 Stunden wurde das Abwasser abgekühlt und die Konzentration der Nitroaromaten bestimmt. Wie Tabelle 1 zeigt gelingt der Abbau der Nitrophenole durch die Nassoxidation ohne Vor-Reduktion nur zu 62 %.

**Tabelle 1**

| | **2-NP** | **4-NP** | **2,4- DNP** | **2,6- DNP** | **2,4,6-TNP** | **Summe Nitrophenole** |
|---|---|---|---|---|---|---|
| | **mg/kg** | **mg/kg** | **mg/kg** | **mg/kg** | **mg/kg** | **mg/kg** |
| Abwasser vor Behandlung | 1 440 | 106 | 7 756 | 1 416 | 376 | 11 094 |
| Probe nach Behandlung | 367 | 80 | 3 011 | 681 | 72 | 4 211 |

### Vergleichsbeispiel 2: Nassoxidation im sauren Milieu ohne Vor-Reduktion

1 L Abwasser aus der Produktion von Nitroaromaten, das stark alkalisch war, wurde in einem Becherglas mit Schwefelsäure versetzt, um es zu neutralisieren und sauer zu stellen. Es erfolgte ein Ausfallen eines weißen Niederschlags, der aus festen Nitro-hydroxy-aromaten bestand. Da nicht auszuschließen ist, dass von diesen Feststoffen eine Gefährdung durch ihre Explosionsgefährlichkeit ausgeht, wurde aus Sicherheitsgründen keine Nassoxidation durchgeführt.

### Vergleichsbeispiel 3: Vor-Reduktion mit Natriumsulfit (anorganisch) und Nassoxidation

4,5 L Abwasser aus der Produktion von Nitroaromaten wurden mit 270 g Natriumsulfit versetzt, in einen Labor-Rührwerksbehälter gegeben und für eine Stunde bei 70 °C gehalten. Anschließend wurden 4 L des so behandelten Abwassers mit 67 mL Schwefelsäure und 6 g Eisen(II)sulfat-Heptahydrat versetzt. Anschließend erfolgte eine stufenweise Erhitzung auf 200 °C und die Zugabe von Sauerstoff auf einen Gesamtdruck von 20 bar. Nach 3 Stunden wurde das Abwasser abgekühlt und die Konzentration der Nitroaromaten bestimmt. Wie Tabelle 2 zeigt, wurden sämtliche Nitrophenole bis unter die Nachweisgrenze eliminiert. Eine derartige Behandlung ist jedoch wegen des hohen Preises des Reduktionsmittels unwirtschaftlich.

**Tabelle 2**

| | **2-NP** | **4-NP** | **2,4- DNP** | **2,6- DNP** | **2,4,6-TNP** | **Summe Nitrophenole** |
|---|---|---|---|---|---|---|
| | **mg/kg** | **mg/kg** | **mg/kg** | **mg/kg** | **mg/kg** | **mg/kg** |
| Abwasser vor Behandlung | 1 440 | 106 | 7 756 | 1 416 | 376 | 11 094 |
| Probe nach Behandlung | <1 | <1 | <1 | <1 | <1 | < 5 |

**Vergleichsbeispiel 4: Vor-Reduktion mit Eisenspänen oder Braunkohle ohne Nassoxidation** 4 bzw. 5 L Abwasser aus der Produktion von Nitroaromaten wurden mit 200 g Eisenspänen bzw. mit 200 g Braunkohlestaub versetzt und für drei Stunden bei 200 °C gehalten. Anschließend wurde das Abwasser abgekühlt und die Konzentration der Nitroaromaten bestimmt. Eine anschließende Nassoxidation fand nicht statt. Wie Tabelle 3 zeigt, gelingt der Abbau der Nitrophenole durch die Vor-Reduktion mit Eisenspänen zu 64 % und mit Braunkohle zu 86 %.

**Tabelle 3**

| | **2-NP** | **4-NP** | **2,4- DNP** | **2,6- DNP** | **2,4,6-TNP** | **Summe Nitrophenole** |
|---|---|---|---|---|---|---|
| | **mg/kg** | **mg/kg** | **mg/kg** | **mg/kg** | **mg/kg** | **mg/kg** |
| Abwasser vor Behandlung | 1 074 | 104 | 5 350 | 1 382 | 512 | 8 422 |
| Probe nach Behandlung mit Eisenspänen | 117 | 106 | 2677 | 106 | <20 | 3046 |
| Probe nach Behandlung mit Braunkohlestaub | 135 | 70 | 935 | 27 | <5 | 1 172 |

### Erfindungsgemäßes Beispiel 5: Vor-Reduktion mit Braunkohle (organisch) und Nassoxidation

5 L Abwasser aus der Produktion von Nitroaromaten wurden mit 200 g Braunkohlestaub versetzt und für drei Stunden bei 200 °C gehalten. Anschließend wurden 4 L des so behandelten Abwassers mit 51 mL Schwefelsäure und 6 g Eisen(II)sulfat-Heptahydrat versetzt. Anschließend erfolgte eine stufenweise Erhitzung auf 200 °C und die Zugabe von Sauerstoff auf einen Gesamtdruck von 20 bar. Nach 3 Stunden wurde das Abwasser abgekühlt und die Konzentration der Nitrophenole bestimmt. Wie Tabelle 4 zeigt, wurden sämtliche Nitrophenole bis unter die Nachweisgrenze eliminiert.

**Tabelle 4**

| | **2-NP** | **4-NP** | **2,4- DNP** | **2,6- DNP** | **2,4,6-TNP** | **Summe Nitrophenole** |
|---|---|---|---|---|---|---|
| | **mg/kg** | **mg/kg** | **mg/kg** | **mg/kg** | **mg/kg** | **mg/kg** |
| Abwasser vor Behandlung | 1 074 | 104 | 5 350 | 1 382 | 512 | 8 422 |
| Probe nach Behandlung | < 5 | < 5 | < 5 | < 5 | < 5 | < 25 |

### Erfindungsgemäßes Beispiel 6: Elimination von Nitrit

5 L Abwasser aus der Produktion von Nitroaromaten wurden mit 50 g Braunkohlestaub versetzt und für drei Stunden bei 180 °C gehalten. Anschließend wurde eine Probe entnommen und die Konzentration der Stickstoffspezies bestimmt. 3 L des so behandelten Abwassers wurden dann mit Schwefelsäure und 4,5 g Eisen(II)sulfat-Heptahydrat versetzt. Anschließend erfolgte eine stufenweise Erhitzung auf 200 °C und die Zugabe von Sauerstoff auf einen Gesamtdruck von 20 bar. Nach 2 Stunden wurde das Abwasser abgekühlt und die Konzentration der Stickstoffspezies bestimmt. Wie Tabelle 5 zeigt, wurde Nitrit vollständig entfernt und die Stickstoff-Spezies überwiegend in Ammonium umgesetzt.

**Tabelle 5**

| | **N(gesamt)** | **NO₃⁻-N** | **NO₂⁻-N** | **NH₄⁺-N** |
|---|---|---|---|---|
| | **mg/l** | **mg/l** | **mg/l** | **mg/l** |
| Abwasser vor Behandlung | 1 910 | < 1 | 290 | 16 |
| Probe nach Reduktion mit Braunkohle | 1 690 | < 1 | 284 | 486 |
| Probe nach Oxidation mit Sauerstoff | 1 310 | 78 | <1 | 1 678 |

## Patentansprüche

1. Verfahren zur Behandlung von Nitroaromaten und / oder Nitro-hydroxy-aromaten enthaltendem alkalischem Abwasser aus der Produktion von Nitroaromaten **dadurch gekennzeichnet, dass** das alkalische Abwasser in einer ersten Stufe mit einem organischen Reduktionsmittel, das in dem Abwasser nicht salz-bildend ist, ausgewählt aus Torf, Braunkohle und / oder Steinkohle, versetzt und unter reduzierenden Bedingungen behandelt wird, wobei das alkalische Abwasser auf Temperaturen von_ 80 - 200 °C erhitzt und in diesem Temperaturbereich für eine Verweilzeit zwischen 5 min und 5 h gehalten wird, und das aus der ersten Stufe erhaltene Abwasser anschließend in einer zweiten Stufe sauer gestellt und mit einem Oxidationsmittel oxidiert wird.

2. Verfahren nach Anspruch 1, **dadurch gekennzeichnet, dass** als Oxidationsmittel Sauerstoff eingesetzt wird.

3. Verfahren nach Anspruch 1, **dadurch gekennzeichnet, dass** die zweite Stufe in einem Reaktor durchgeführt wird, in den direkt Säure eingeführt wird und in dem die Oxidation durchgeführt wird.

4. Verfahren nach Anspruch 1, **dadurch gekennzeichnet, dass** das Nitroaromaten und / oder Nitro-hydroxy-aromaten enthaltende Abwasser aus der Produktion von Nitrobenzol oder Dinitrotoluol stammt.

## Claims

1. Process for treating alkaline wastewater from the production of nitroaromatics which contains nitroaromatics and/or nitrohydroxyaromatics, **characterized in that** the alkaline wastewater is admixed in a first stage with an organic reducing agent which does not form a salt in the wastewater and is selected from among peat, brown coal and hard coal and treated under reducing conditions, where the alkaline wastewater is heated to temperatures of 80-200°C and maintained in this temperature range for a residence time in the range from 5 minutes to 5 hours and the wastewater obtained from the first stage is subsequently acidified and oxidized by means of an oxidant in a second stage.

2. Process according to Claim 1, **characterized in that** oxygen is used as oxidant.

3. Process according to Claim 1, **characterized in that** the second stage is carried out in a reactor into which acid is introduced directly and in which the oxidation is carried out.

4. Process according to Claim 1, **characterized in that** the wastewater containing nitroaromatics and/or nitrohydroxyaromatics originates from the production of nitrobenzene or dinitrotoluene.

## Revendications

1. Procédé pour le traitement d'eau résiduaire alcaline contenant des composés aromatiques nitrés et/ou hydroxy-aromatiques nitrés, provenant de la production de composés aromatiques nitrés, **caractérisé en ce que** dans une première étape on ajoute à l'eau résiduaire alcaline un réducteur organique, qui n'est pas salifiant dans l'eau résiduaire, choisi parmi la tourbe, la lignite et/ou le charbon et on la traite dans des conditions réductrices, en chauffant l'eau résiduaire alcaline à des températures de 80 - 200 °C et en la maintenant dans cette plage de température pendant un temps de séjour compris entre 5 minutes et 5 heures, et ensuite dans une deuxième étape on acidifie l'eau résiduaire obtenue dans la première étape et on l'oxyde à l'aide d'un oxydant.

2. Procédé selon la revendication 1, **caractérisé en ce qu'**on utilise comme oxydant l'oxygène.

3. Procédé selon la revendication 1, **caractérisé en ce qu'**on effectue la deuxième étape dans un réacteur, dans lequel on introduit directement l'acide et dans lequel on effectue l'oxydation.

4. Procédé selon la revendication 1, **caractérisé en ce que** l'eau résiduaire contenant des composés aromatiques nitrés et/ou hydroxy-aromatiques nitrés provient de la production du nitrobenzène ou du dinitrotoluène.
